# NOUVEAU FASCICULE DE BREVET EUROPEEN

(11) **EP 3 350 417 B2**
(45) Date de publication et mention de la décision concernant l'opposition: **21.06.2023**
(45) Mention de la délivrance du brevet: 11.12.2019
(21) Numéro de dépôt: 16774530.6
(22) Date de dépôt: 12.09.2016
(51) Int. Cl.: F01D 11/24, F01D 25/12, F02C 7/18

(54) **DISPOSITIF DE VENTILATION D'UN CARTER DE TURBINE D'UNE TURBOMACHINE**
VORRICHTUNG ZUR BELÜFTUNG EINES TURBOMASCHINENGEHÄUSES
DEVICE FOR VENTILATION OF A TURBOMACHINE TURBINE CASING

(30) Priorité: 15.09.2015 FR 1558619
(43) Date de publication de la demande: 25.07.2018
(73) Titulaire: Safran Aircraft Engines, 75015 Paris (FR)
(72) Inventeur: PELLATON, Bertrand Guillaume Robin, 77550 Moissy-Cramayel (FR); JOUY, Baptiste Marie Aubin Pierre, 77550 Moissy-cramayel Cedex (FR); MOUSSETTE, Adrien, 77550 Moissy-Cramayel (FR); VILLARD, Loïc, 77550 Moissy-Cramayel (FR)
(74) Mandataire: Regimbeau
(86) Numéro de dépôt international: PCT/FR2016/052292
(87) Numéro de publication internationale: WO 2017/046499

(56) Documents cités:
- WO-A2-2013/186757
- FR-A1- 2 766 232
- US-A- 4 826 397
- US-A- 5 100 291

## Description

### DOMAINE TECHNIQUE GENERAL

L'invention concerne un dispositif de ventilation d'un carter de turbine d'une turbomachine ainsi qu'une turbomachine comprenant un tel dispositif.

### ETAT DE LA TECHNIQUE

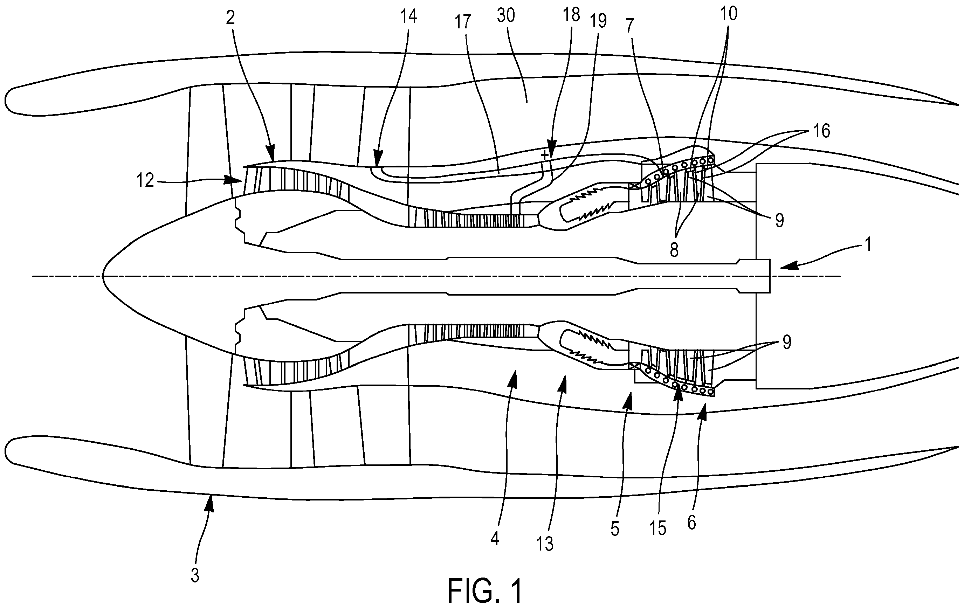

En relation avec la **figure** 1, une turbomachine d'un aéronef comprend, de manière connue, un rotor 1 tournant dans l'axe de la machine et entouré par un stator 2.

Le rotor 1 et le stator 2 définissent entre eux une veine 12 d'écoulement des gaz qui parcourt successivement un compresseur basse pression 3, un compresseur à haute pression 4, une chambre de combustion 13, une turbine à haute pression 5 et une turbine à basse pression 6.

La turbine basse pression 6 comprend des étages de distributeurs 8 (aubes fixes) fixés à un carter de turbine 7 et alternant avec des étages d'aubes mobiles 9, fixées au rotor 1, en direction axiale de la machine. Le carter de turbine 7, qui délimite la veine 12 d'écoulement des gaz chauds, est muni d'anneaux d'abradable 10 en regard de la plateforme des aubes mobiles 9.

Afin de protéger le carter de turbine 7 des échauffements excessifs, et de garantir la bonne performance de la turbine, la turbomachine comprend un dispositif de ventilation 15 comprenant plusieurs rampes 16 perforées disposées autour de la surface externe du carter de turbine 7. Ces rampes 16 sont alimentées en air sous pression correspondant à un mélange d'un flux d'air « froid » prélevé dans une veine secondaire 30 périphérique en aval des compresseurs au moyen d'un point de prélèvement 14, qui est une écope située dans la veine secondaire 30 et d'un flux d'air « chaud » prélevé dans la veine 12 d'écoulement des gaz chauds au niveau du compresseur haute pression 5 .

Le flux d'air froid prélevé dans la veine secondaire 30 est acheminé vers les rampes par l'intermédiaire d'un premier conduit 17 et le flux d'air chaud prélevé dans la veine 12 d'écoulement des gaz chauds est acheminé vers les rampes par l'intermédiaire d'un second conduit 19. Une vanne 18 permet de piloter la perméabilité des deux conduits afin de contrôler la température du mélange des deux flux issu des deux conduits. L'air sous pression est projeté au travers des perforations des rampes sur la surface externe du carter de turbine et vient par conséquent le refroidir.

Une rampe 16 est typiquement en forme d'anneau perforé au droit du carter de turbine 7 afin de projeter l'air sur le carter de turbine 7.

Le dispositif de ventilation 15 s'étend autour de la turbine basse pression 6.

Outre le refroidissement du carter de stator, le dispositif de ventilation permet de régler les jeux entre les aubes mobiles 9 et l'abradable 10. En effet, les changements de température du carter provoquent une variation du jeu entre les aubes mobiles et les anneaux d'abradable 10 à cause de la dilatation thermique du carter de stator.

Or les jeux entre les sommets des aubes mobiles et les anneaux d'abradable 10 sont déterminants pour les performances de la turbomachine.

En effet, plus les jeux sont faibles, moins le débit contournant les aubes mobiles 9 et les distributeurs 8 est important et meilleur est le rendement de la turbine basse pression.

En conséquence, le refroidissement du carter de turbine 7 a un impact important sur les performances de la turbine basse pression et de fait sur la turbomachine.

On connaît également les documents US5100291, WO2013186757, et US4826397 qui décrivent des dispositifs de ventilation. Toutefois, les solutions proposées dans ces documents ne permettent pas d'améliorer suffisamment les performances.

### PRESENTATION DE L'INVENTION

Un but de l'invention est d'améliorer les dispositifs de ventilation connus afin d'améliorer les performances de la turbine basse pression et donc de la turbomachine.

A cet effet, l'invention propose un carter de turbine d'une turbomachine, selon les caractéristiques de la revendication 1.

L'invention est avantageusement complétée par les caractéristiques suivantes, prises seules ou en une quelconque de leur combinaison techniquement possible.

La section du bouclier est en forme d'ellipse.

L'ellipse présente un grand axe deux fois supérieures au diamètre de la section de l'anneau principal.

Une cavité définie entre le bouclier et l'anneau principal est remplie d'air ou d'argon.

L'invention concerne également une turbomachine comprenant une turbine et un dispositif de ventilation d'un carter de turbine selon l'invention.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels, outre la figure 1 illustrant une vue schématique d'une turbomachine de type connue déjà discutée :
- La figure 2 illustre une disposition de rampes dans un dispositif de ventilation de type connu ;
- La figure 3 illustre une disposition de rampes dans un dispositif de ventilation de selon un mode de réalisation de l'invention ;
- La figure 4 illustre une rampe d'un dispositif de ventilation selon un mode de réalisation de l'invention.

Sur l'ensemble des figures les éléments similaires portent des références identiques.

### DESCRIPTION DETAILLEE DE L'INVENTION

On a présenté sur la figure 1, un dispositif de ventilation, de type connu, comprenant des rampes 16 qui sont typiquement en forme d'anneau perforés au droit du carter de turbine 7 afin de projeter de l'air sur le carter de turbine 7.

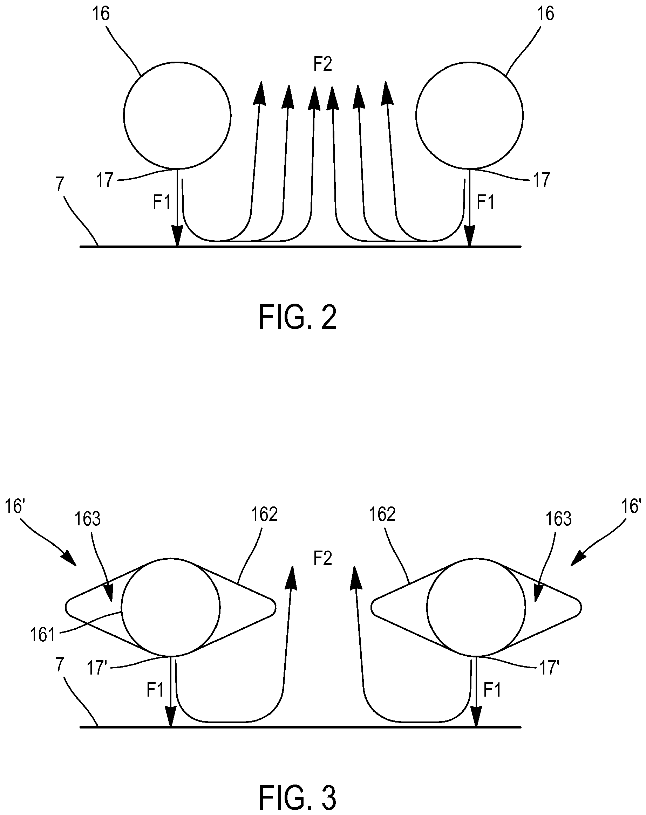

En relation avec la **figure 2****,** la Demanderesse s'est aperçue qu'un flux d'air projeté vers le carter de turbine 7 va se réchauffer au contact de ce dernier.

De ce fait, un flux d'air chaud post-impact F2 remonte du carter de turbine 7 vers les rampes de sorte qu'il peut réchauffer ces dernières et donc le flux d'air froid F1 qui en sort.

Ainsi, compte tenu que plusieurs rampes sont disposées les unes à côté des autres, de l'air chaud issu de l'impact de l'air froid sur le carter de turbine vient réchauffer la ou les rampes voisines ce qui diminue les performances de refroidissement du carter.

Afin d'éviter ce problème, la Demanderesse a modifié les rampes de la figure 2 et de la figure 1 (toujours disposées au même endroit dans la turbomachine de la figure 1) en relation avec la **figure 3** et propose un dispositif de ventilation comprenant une pluralité de rampes 16', chacune comprenant un anneau principal 161 dans lequel circule un flux d'air et un bouclier 162 configuré pour isoler l'anneau principal d'un flux d'air remontant du carter de turbine 7 vers les rampes 16' après avoir été projeté vers le carter de turbine 7.

L'anneau principal 161 comprend des orifices 17' configurés pour projeter un flux d'air vers le carter de turbine 7.

Comme on peut le voir sur la figure 3, un flux d'air F2 issu du carter de turbine 7 après avoir impacté le carter de turbine remonte vers les rampes. Mais en comparaison avec ce même flux d'air dans la configuration de l'art antérieur (voir la figure 2) est plus éloigné de l'anneau principal.

Grâce à ce bouclier 162, des zones mortes inaccessibles par le flux post-impact F2 sont créées autour de l'anneau principal. Ces zones mortes isolent thermiquement l'anneau principal 161, diminuant, en regard de l'art antérieur, la température du flux d'air froid F1 et améliorant l'efficacité du dispositif de refroidissement.

Le bouclier enveloppe complètement l'anneau principal et comprend des orifices alignés sur les orifices de l'anneau principal.

Le bouclier 162 s'étend tangentiellement à partir des orifices de la rampe, le bouclier étant en contact intime avec l'anneau principal au niveau des orifices. Un tel contact permet de limiter la perte de charge lors de l'expulsion de l'air depuis l'anneau principal vers le carter de turbine 7.

Le bouclier s'étend tangentiellement depuis la rampe à partir d'une zone de contact intime, entre la rampe et le bouclier, diamétralement opposée aux orifices. Un tel contact, permet de limiter l'encombrement externe et permet de profiter notamment de l'air froid qui circule dans la veine secondaire au-dessus et de l'échange par rayonnement avec la nacelle qui elle est froide.

Afin de limiter l'encombrement radial des boucliers, ce dernier a une forme en ellipse. On pourra également prévoir une forme rectangulaire ou bien encore ovale.

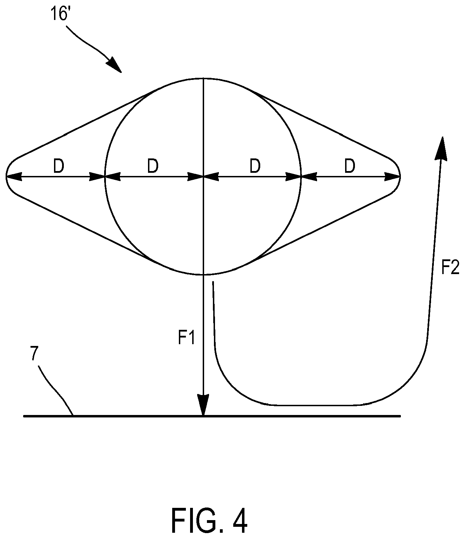

Dans le cas d'une forme en ellipse, comme on peut le voir sur la **figure 4****,** l'ellipse présente un grand axe deux fois supérieur au diamètre D de la section de la rampe.

Le bouclier 162 peut être du même matériau que la rampe, par exemple en alliage à base de chrome et nickel.

Le bouclier peut être creux, la cavité 163 définie entre le bouclier et la rampe pouvant être remplie d'air ou d'argon. On préférera toutefois l'air qui est un meilleur isolant et qui présente un coût moindre.

## Revendications

1. Carter de turbine d'une turbomachine comprenant un dispositif de ventilation qui comprend une pluralité de rampes (16') configurées pour projeter de l'air sur le carter de turbine, les rampes étant disposées les unes à côté des autres, chaque rampe comprenant un anneau principal (161) dans lequel circule de l'air, l'anneau principal (161) comprenant des orifices (17') configurés pour projeter un flux d'air vers le carter de turbine, chaque rampe comprenant un bouclier (162) configuré pour isoler l'anneau principal (161) d'un flux d'air remontant du carter de turbine vers les rampes après avoir été projeté vers le carter de turbine, le bouclier comprenant des orifices alignés sur les orifices de l'anneau principal (161), **caractérisé en ce que** le bouclier (162) enveloppe complètement l'anneau principal (161) en délimitant une cavité (163) entre l'anneau principal (161) et le bouclier (162), **en ce que** le bouclier (162) s'étend tangentiellement à partir des orifices de l'anneau principal (161), le bouclier (162) étant en contact intime avec l'anneau principal (161) au niveau des orifices et **en ce que** le bouclier (162) s'étend tangentiellement depuis l'anneau principal (161) à partir d'une zone de contact intime, entre l'anneau principal (161) et le bouclier, diamétralement opposée aux orifices.

2. Carter selon la revendication 1, dans lequel la section du bouclier (162) est en forme d'ellipse.

3. Carter selon la revendication précédente, dans lequel l'ellipse présente un grand axe deux fois supérieur au diamètre de la section de l'anneau principal (161).

4. Carter selon l'une des revendications précédentes, dans lequel une cavité (163) définie entre le bouclier (162) et l'anneau principal (161) est remplie d'air ou d'argon.

5. Turbomachine comprenant une turbine qui comprend un carter de turbine selon l'une des revendications précédentes.

## Patentansprüche

1. Turbinengehäuse einer Turbomaschine, umfassend eine Vorrichtung zur Belüftung, die eine Vielzahl von Rampen (16') umfasst, die konfiguriert sind, um Luft auf das Turbinengehäuse zu projizieren, wobei die Rampen nebeneinander angeordnet sind, wobei jede Rampe einen Hauptring (161) umfasst, in dem Luft zirkuliert, wobei der Hauptring (161) Öffnungen (17') umfasst, die konfiguriert sind, um eine Luftströmung zu dem Turbinengehäuse zu projizieren, wobei jede Rampe einen Schutzschild (162) umfasst, der konfiguriert ist, um den Hauptring (161) von einer Luftströmung zu isolieren, die vom Turbinengehäuse zu den Rampen hochströmt, nachdem sie zu dem Turbinengehäuse projiziert worden ist, wobei der Schutzschild Öffnungen umfasst, die mit den Öffnungen des Hauptringes (161) ausgerichtet sind, **dadurch gekennzeichnet, dass** der Schutzschild (162) den Hauptring (161) vollkommen umhüllt, indem er eine Vertiefung (163) zwischen dem Hauptring (161) und dem Schutzschild (162) eingrenzt, dadurch, dass sich der Schutzschild (162) tangential aus den Öffnungen des Hauptrings (161) erstreckt, wobei der Schutzschild (162) in engem Kontakt mit dem Hauptring (161) im Bereich der Öffnungen ist, und dadurch, dass sich der Schutzschild (162) tangential aus dem Hauptring (161) aus einer Zone in engem Kontakt zwischen dem Hauptring (161) und dem Schutzschild diametral gegenüber den Öffnungen erstreckt.

2. Gehäuse nach Anspruch 1, wobei der Querschnitt des Schutzschildes (162) in Form einer Ellipse ist.

3. Gehäuse nach dem vorstehenden Anspruch, wobei die Ellipse eine lange Achse, doppelt so groß wie der Durchmesser des Querschnitts des Hauptringes (161) aufweist.

4. Gehäuse nach einem der vorstehenden Ansprüche, wobei eine Vertiefung (163), die zwischen dem Schutzschild (162) und dem Hauptring (161) definiert ist, mit Luft oder mit Argon gefüllt ist.

5. Turbomaschine, umfassend eine Turbine, die ein Turbinengehäuse nach einem der vorstehenden Ansprüche umfasst.

## Claims

1. Turbine casing of a turbomachine comprising a ventilation device which comprises a plurality of manifolds (16') configured to spray air onto the turbine casing, the manifolds being disposed side by side, each manifold comprising a main ring (161) in which air circulates, the main ring (161) comprising openings (17') configured to spray an air flow toward the turbine casing, each manifold comprising a shield (162) configured to isolate the main ring (161) from an air flow reflected from the turbine casing toward the manifolds after having been sprayed toward the turbine casing, the shield comprising openings aligned on the openings of the main ring (161) **characterized in that** the shield (162) completely surrounds the main ring (161) by delimiting a cavity (163) between the main ring (161) and the shield (162), **in that** the shield (162) extends tangentially from the openings of the main ring (161), the shield (162) being in intimate contact with the main ring (161) at the openings, and **in that** the shield (162) extends tangentially from the main ring (161) from an intimate contact zone, between the main ring and the shield, diametrically opposed to the openings.

2. Turbine casing according to claim 1, wherein the cross-section of the shield (162) has the shape of an ellipse.

3. Turbine casing according to the preceding claim, wherein the ellipse has a major axis twice as large as the diameter of the cross-section of the main ring (161).

4. Turbine casing according to one of the preceding claims, wherein a cavity (163) defined between the shield (162) and the main ring (161) is filled with air or argon.

5. Turbomachine comprising a casing which comprises a turbine casing according to one of the preceding claims.
